# EUROPÄISCHE PATENTSCHRIFT

(11) **EP 0 506 886 B1**
(45) Veröffentlichungstag und Bekanntmachung des Hinweises auf die Patenterteilung: **20.07.1994**
(21) Anmeldenummer: 91903170.8
(22) Anmeldetag: 18.12.1990
(51) Int. Cl.: H02P 6/02

(54) **VERFAHREN UND VORRICHTUNG ZUR STEUERUNG EINES ELEKTRONISCH KOMMUTIERTEN MOTORS**
PROCESS AND DEVICE FOR CONTROLLING AN ELECTRONICALLY COMMUTED MOTOR
PROCEDE ET DISPOSITIF DE COMMANDE DE MOTEURS A COMMUTATION ELECTRONIQUE

(30) Priorität: 20.12.1989 DE 3942003
(43) Veröffentlichungstag der Anmeldung: 07.10.1992
(73) Patentinhaber: Deutsche Thomson-Brandt GmbH, 78003 Villingen-Schwenningen (DE)
(72) Erfinder: GLEIM, Günter, D-7730 Villingen (DE)
(74) Vertreter: Einsel, Robert, Dipl.-Ing.
(86) Internationale Anmeldenummer: EP9002225
(87) Internationale Veröffentlichungsnummer: WO9109462

(56) Entgegenhaltungen:
- DE-A- 2 052 695
- DE-A- 2 721 630
- US-A- 4 295 085
- PATENT ABSTRACTS OF JAPAN, vol. 11, no. 36 (E-477)(2483), 03 Februar 1987 & JP-A-61 203887
- PATENT ABSTRACTS OF JAPAN, vol. 11, no. 110 (E-496)(2557), 07 April 1987 & JP-A-61 258696
- PATENT ABSTRACTS OF JAPAN, vol. 9, no. 225 (E-342)(1948) 11 September 1985 & JP-A-60 082088
- PATENT ABSTRACTS OF JAPAN, vol. 7, no. 226 (E-202)(1371) 07 Oktober 1983 & JP-A-58 116087
- PATENT ABSTRACTS OF JAPAN, vol. 9, no. 189 (E-333)(1912), 06 August 1985 & JP-A-60 055885

## Beschreibung

Die Erfindung betrifft ein Verfahren zur Steuerung eines elektronisch kommutierten Motors nach dem Oberbegriff des Anspruchs 1.

Bei elektronischen Geräten mit Motoren, die dort z.B. als Band-, Platten- oder Kopfantrieb verwendet werden, besteht das Problem, unterschiedliche Betriebszustände möglichst schnell einstellen zu können. Derartige Betriebszustände sind Drehzahlen, Drehmomente oder eine Kombination aus beiden. Zur Änderung der Drehzahl und/oder des Drehmomentes ist es grundsätzlich möglich, den Strom durch die Wicklungen von einem ersten Wert auf einen zweiten Wert zu ändern. Die Drehzahl bzw. das Drehmoment des Motors nähert sich der durch den Wicklungsstrom vorgegebenen Zieldrehzahl bzw. dem Zieldrehmoment dann asymptotisch an.

Eine Verbesserung läßt sich erzielen, wenn während der Beschleunigungs- oder Verzögerungsphase bei Drehzahländerungen bzw. in der Lastwechselphase bei Drehmomentänderungen zunächst ein Strom eingespeist wird, der den stationären Wert wesentlich überschreitet bzw. unterschreitet. Ist nun der Endwert der Drehzahl bzw. des Drehmoments erreicht, so wird der Strom durch die Wicklungen dann auf den stationären Wert verändert, der dem geänderten Betriebszustand entspricht.

Diese Vorgehensweise bringt zwar schon eine erhebliche Verbesserung mit sich, ist jedoch bei den wachsenden Anforderungen an die Schnelligkeit und Genauigkeit der Geräte nicht mehr ausreichend.

Der Erfindung liegt deshalb die Aufgabe zugrunde, das eingangs genannte Verfahren dahingehend zu verbessern, daß bei Steuerungen von Motoren bessere Beschleunigungs- oder Verzögerungswerte sowie schnellere Reaktionen auf Lastwechsel erreicht werden können, als dies durch eine ausschließlich betragsmäßige Veränderung des Wicklungsstroms möglich wäre.

Diese Aufgabe wird bei einem Verfahren nach dem Oberbegriff des Anspruchs 1 durch die in Kennzeichen angegebenen Merkmale gelöst.

Aus DE-OS 20 52 695 sind Schaltungseinrichtungen für einen elektronisch kommutierten Gleichstrommotor bekannt, mittels welchen sich die Drehmoment-Drehzahlkennlinien des in seiner Dimensionierung schon festliegenden Motors elektronisch verändern lassen, indem man die Dauer der Erreger- oder Lastimpulse und ihre Verzögerung in Bezug auf Abtastimpulse, die mittels mit dem Motor gekoppelte Geber gewonnen werden, durch elektrische Größen regelt, z.B. in Abhängigkeit von Drehzahl und/oder Drehmoment des Motors bzw. in Abhängigkeit eines der Drehzahl und/oder dem Drehmoment proportionalen Signals.

Die Erfindung beruht auf folgenden Überlegungen:
Um einen guten Wirkungsgrad des elektronisch kommutierten Motors zu erzielen, wird der Kommutierungszeitpunkt so gelegt, daß das durch den Kommutierungsstrom an- und abschwellende Magnetfeld eine maximale An- bzw. Abstoßungskraft auf die Pole des Motors ausüben kann. Im stationären Betrieb des Motors weist die Wicklungsimpedanz einen stark induktiven Anteil auf. Das Magnetfeld baut sich daher langsam auf und ab. Damit das Magnetfeld gerade dann ein Maximum erreichen kann, wenn die Lage der Pole eine maximale An- bzw. Abstoßungskraft zuläßt, wird der Kommutierungszeitpunkt wesentlich vor den Zeitpunkt gelegt, an dem die Lage der Pole diese maximale Anziehungs- bzw. Abstoßungskraft zuläßt.

Bei Belastung des Motors, also z.B. während der Beschleunigungsphase oder einem Lastwechsel, nimmt der ohmsche Anteil der Wicklungsimpedanz zu mit der Folge, daß sich das Magnetfeld schneller auf- und abbaut. Unter Beibehaltung der für den Leerlauf oder den stationären Betrieb gültigen Kommutierungszeitpunkte würde dies zu einer Verschiebung des zeitlichen Maximums des Magnetfeldes gegenüber dem Zeitpunkt zur Erzielung einer maximalen Anziehungs- bzw. Abstoßungskraft führen. Dadurch kann die auf die Pole ausgeübte Anziehungs- bzw. Abstoßungskraft nicht mehr optimal angreifen.

Werden jetzt die Kommutierungszeitpunkte so verlegt, daß sich das zeitliche Maximum des Magnetfeldes mit der Lage der Pole zur Erzielung einer maximalen Anziehungs- bzw. Abstoßungskraft deckt, dann wird auch während der Beschleunigungsphase oder einem Lastwechsel ein besserer Wirkungsgrad erzielt, das heißt die eingesetzte Energie führt zu einer Verbesserung der Beschleunigung bzw. zu einer schnelleren Reaktion bei Lastwechseln.

Die Erfindung betrifft ferner eine Vorrichtung zur Steuerung eines elektronisch kommutierten Motors nach dem Oberbegriff des Anspruchs 3.

Diesbezüglich liegt ihr die Aufgabe zugrunde, die Vorrichtung dahingehend zu verbessern, daß bei Steuerungen von Motoren bessere Beschleunigungs- oder Verzögerungswerte sowie schnellere Reaktionen auf Lastwechsel erreicht werden können, als dies durch eine ausschließlich betragsmäßige Veränderung des Wicklungsstroms möglich wäre.

Diese Aufgabe wird bei einer Vorrichtung nach dem Oberbegriff des Anspruchs 3 durch die im Kennzeichen angegebenen Merkmale gelöst.

Weiterbildungen und vorteilhafte Ausgestaltungen der Erfindung ergeben sich aus den Ansprüchen, der weiteren Beschreibung und der Zeichnung, die ein Ausführungsbeispiel veranschaulicht.

In der Zeichnung zeigen:
- Fig. 1: Ein Diagramm des Wicklungsstromes über der Zeit für verschiedene Ansteuerungsfälle,
- Fig. 2: ein Diagramm der Motordrehzahl über der Zeit für die in Fig. 1 dargestellten Ansteuerungsfälle sowie den Ansteuerungsfall nach der Erfindung,
- Fig. 3: ein Diagramm des Kommutierungszeitpunktes über der Zeit und
- Fig. 4: eine Schaltungsanordnung zur Durchführung des Verfahrens der Erfindung.

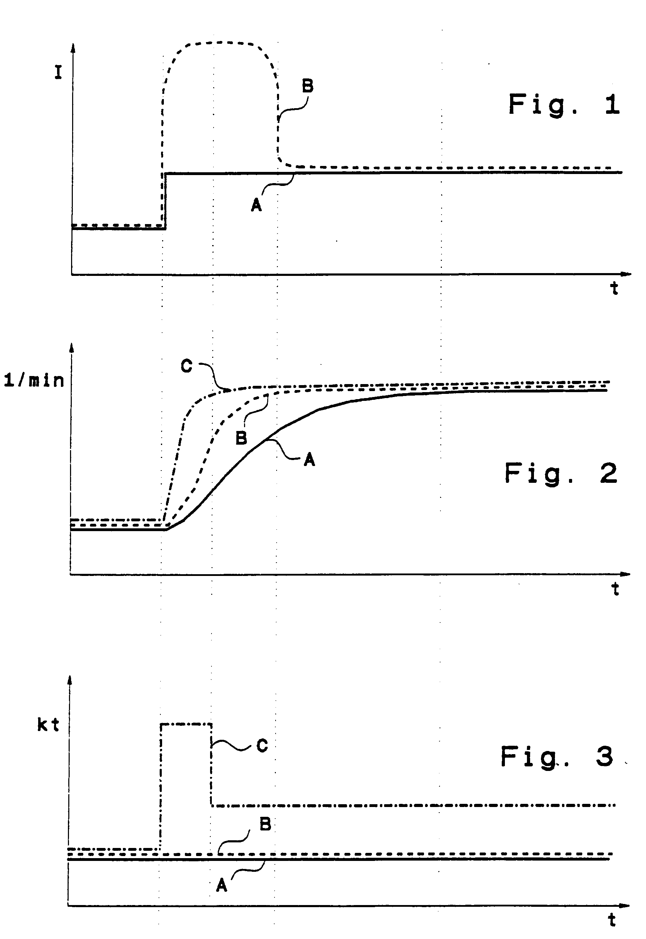

In Fig. 1 ist mit Kurve A ein Ansteuerungsfall dargestellt, bei dem der Wicklungsstrom durch die Motorwicklung von einem ersten stationären Wert auf einen zweiten stationären Wert erhöht wird. Der Verlauf der sich als Folge der Änderung des Wicklungsstroms ebenfalls ändernden Motordrehzahl ist in Fig. 2, ebenfalls mit Kurve A bezeichnet, dargestellt. Wie die Kurve zeigt, ändert sich bei dieser Art der Ansteuerung die Drehzahl nur sehr langsam. Die Zieldrehzahl wird erst nach sehr langer Zeit erreicht.

Eine andere Ansteuerung ist in Fig. 1 als Kurve B dargestellt. In diesem Fall wird während der Beschleunigungsphase zunächst der Strom wesentlich über den stationären Endwert erhöht und bei Erreichen der Zieldrehzahl dann auf den zweiten, das heißt den stationären Wert abgesenkt.

Die Reaktion der Motordrehzahl auf diese Ansteuerung ergibt sich aus Kurve B in Fig. 2. Daraus geht hervor, daß nunmehr die stationäre angehobene Drehzahl wesentlich schneller erreicht wird. Einer Steigerung des Beschleunigungsverhaltens durch extreme Überhöhung des Wicklungsstromes sind jedoch praktische Grenzen gesetzt, und zwar durch die magnetische Sättigung im Eisen, durch die begrenzte Wärmeabfuhr der Wicklung, durch die Kapazität der Stromversorgung sowie durch die Störwirkungen der Stromspitzen auf benachbarte Baugruppen.

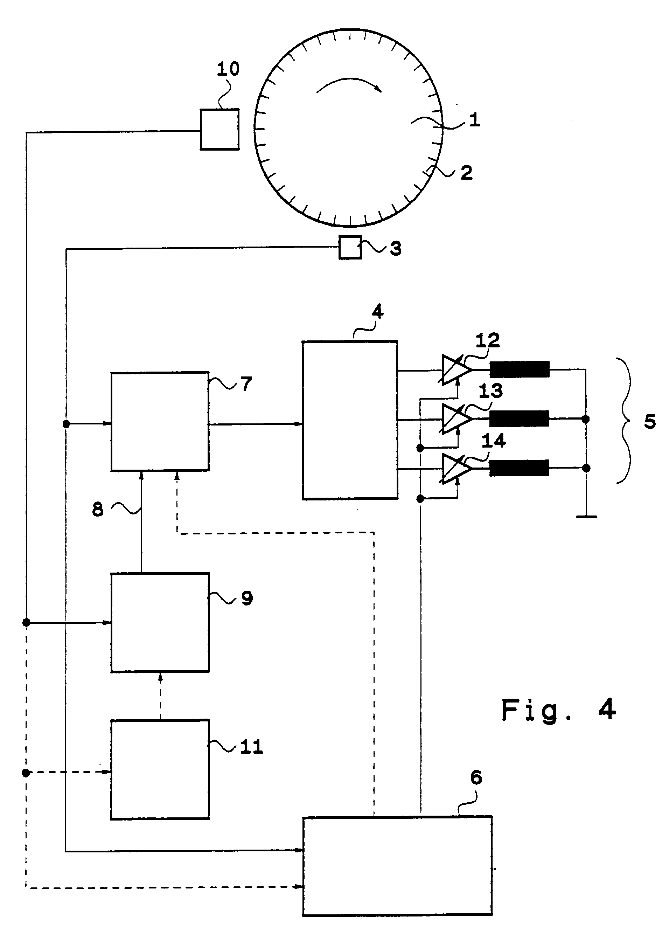

Eine weitere Verbesserung der Beschleunigung ohne die vorgenannten Nachteile wird jedoch erzielt, indem gemäß Fig. 3 zusätzlich der Kommutierungszeitpunkt während der Beschleunigungsphase verändert wird. In diesem Fall zeigt die Darstellung gemäß Fig. 2 anhand der Kurve C, daß die Motordrehzahl nun noch schneller als im Ansteuerungsfall gemäß der Kurve B ihren stationären Zielwert erreicht.

Fig. 4 zeigt das Prinzip einer Schaltung gemäß der Erfindung. Von einem Geber, der im einzelnen aus einer mit dem Rotor des Motors verbundenen Geberscheibe 1 mit Markierungen 2 sowie einem Sensor 3 besteht, werden Signale abgegriffen, die zur Kommutierung herangezogen werden, und einer Kommutierungsschaltung 4 zugeführt. Die Kommutierungsschaltung 4 wiederum schaltet steuerbare Endstufen 12, 13, 14 ein und aus, welche Motorwicklungen 5 mit einem, variablen Strom speisen. Die Kommutierungsschaltung 4 ist auf feste Kommutierungszeitpunkte eingestellt, die nur in einem einzigen Betriebszustand einen optimalen Wirkungsgrad des Motors ergeben.

Außerdem ist ein Rechner 6 vorgesehen, der die Endstufen 12, 13, 14 in Abhängigkeit der vom Geber abgegriffenen Signale steuert. Dieser Rechner 6 könnte auch die hier noch diskret gezeigte Kommutierungsschaltung 4 simulieren.

Erfindungsgemäß ist zwischen dem Sensor 3 und der Kommutierungsschaltung 4 ein variables Verzögerungsglied z.B. in Form eines Schieberegisters 7 angeordnet. Das Schieberegister 7 besitzt einen Steuereingang 8, über den mittels einer Stellgröße die Verzögerungszeit beeinflußt werden kann. Die Stellgröße wird mittels einer Steuerschaltung 9 über eine Steuerkenngröße oder bei einer Folge von Kenngrößen über eine Steuerkennlinie aus einer Steuergröße gewonnen. Auch die Funktion dieser Baugruppen könnte vom Rechner 6 übernommen werden.

Als Steuergröße läßt sich z.B. der variable Strom ausnutzen, mit dem die Motorwicklungen 5 gespeist werden. Denkbar ist auch, das am Rotor entnommene Drehmoment zu messen und hieraus eine Steuergröße zu ermitteln.

Der Zusammenhang zwischen der Steuergröße und der Stellgröße, nämlich die Steuerkenngröße oder die Steuerkennlinie kann für unterschiedliche Betriebsfälle in einer Testreihe ermittelt werden. Der Vorteil einer empirischen Ermittlung besteht darin, daß automatisch alle Motorkenngrößen mit berücksichtigt werden und es sich deshalb erübrigt, die Einflüsse dieser Motorkenngrößen abzuschätzen und zu berechnen.

In einer solchen Testreihe wird der für eine Anwendung vorgesehene Motor oder ein baugleicher Typ bei verschiedenen Kommutierungszeiten beschleunigt oder verzögert oder auch bei gleicher Drehzahl unterschiedlichen Belastungen ausgesetzt. Aus den ermittelten Beschleunigungswerten bzw. Belastungswerten werden die optimalen Kommutierungszeiten ausgewählt, denen entsprechende Stellgrößen der Steuerschaltung 9 entsprechen.

Gemäß einer Weiterbildung kann diese Testreihe auch am endgültigen Einsatzort des Motors duchgeführt werden. Hierzu dient dann eine Meßschaltung 10, die in vorgegeben Zeitabständen oder bei Veränderung der Werte durch Alterung oder Dejustage die entsprechenden Messungen vornimmt und die ermittelte Steuerkenngröße oder Steuerkennlinie dann zur Steuerschaltung 9 überträgt. Der bisher dort gespeicherte Wert der Steuerkenngröße oder die Werte der Steuerkennlinie werden mit den aktualisierten Werten überschrieben. In der Praxis lassen sich auch diese Schaltungen durch einen programmgesteuerten Rechner 6 realisieren.

Noch bessere Ergebnisse lassen sich erzielen, wenn eine Korrekturschaltung 11 vorgesehen wird, die Meßwerte der Meßschaltung 10 auswertet und Korrektursignale an die Steuerschaltung 9 überträgt. Die Korrekturschaltung 11 speichert die von der Meßschaltung 10 erhaltenen Beschleunigungs- und oder Verzögerungswerte. Bei Abweichungen von den ursprünglich maximalen Werten werden vorläufige Korrektursignale zur Steuerschaltung 9 übertragen die als Antwort später von der Meßschaltung 10 ermittelten veränderten Beschleunigungs- und oder Verzögerungswerte ebenfalls gespeichert. Durch Vergleich der gespeicherten Werte zahlreicher zurückliegender Meßreihen läßt sich z.B. die Tendenz der Auswirkungen bei Alterung der Bauteile erkennen. Daraus wird dann eine länger gültige korrigierte Steuerkenngröße oder Steuerkennline extra- oder interpoliert und als Korrektursignal zur Steuerschaltung 9 übertragen.

Bei einer solchen selbstlernenden Schaltung erübrigt sich die gesonderte Aufnahme entsprechender Meßwerte, die ja zwangsläufig eine, wenn auch sehr stark reduzierbare Ausfallzeit für den Benutzer mit sich bringt. Die optimalen Werte werden nach einer gewissen Einschwingzeit bei jedem Motor einer Baureihe individuell erreicht. Darüber hinaus besteht auch der Vorteil, daß Alterungseinflüsse, die eine werksseitig einmal vorgenommene Einstellung verschlechtern würden, automatisch berücksichtigt und ausgeglichen werden können. Sollte einmal eine sprunghafte Verschlechterung, z.B. durch unsanften Transport des Gerätes eintreten, so wird auch dies unmittelbar nach Inbetriebnahme des Gerätes erkannt und sofort mit Korrekturmaßnahmen begonnen.

## Patentansprüche

1. Verfahren zur Steuerung eines elektronisch kommutierten Motors durch Steuerung des Wicklungsstromes, wobei in einer Beschleuningungs-, Verzögerungs- oder Belastungsphase der Wicklungsstrom zunächst über einen stationären, einer Zieldrehzahl oder einem Belastungsfall zugeordneten Wert hinaus verändert wird und bei Erreichen der Zieldrehzahl oder des stationären Belastungszustandes auf den stationären Wert eingestellt wird, und wobei, in der Beschleunigungs-, Verzögerung, und/oder Belastungsphase zusätzlich der Kommutierungszeitpunkt des Wicklungsstromes in Abhängigkeit einer die Beschleunigung, Verzögerung und/oder Belastung vorgebenden Steuerkenngröße oder Steuerkennlinie verändert wird dadurch gekennzeichnet daß die Steuerkenngröße aufgrund von Motorkenngrößen festgelegt wird, indem Beschleunigungs-, Verzögerungs- und/oder Belastungswerte des Motors bei unterschiedlichen Steuerkenngrößen ermittelt werden und der oder die Werte der Steuerkenngröße für maximale Beschleunigungs-, Verzögerungs- und/oder Belastungswerte als Betriebswerte der Steuerkenngröße oder Steuerkennlinie übernommen werden, wobei die Ermittlung des oder der Werte der Steuergröße nach jedem Einschalten des den Motor enthaltenden Gerätes und/oder in vorgegebenen Zeitabständen und/oder bei Veränderung der Werte durch Alterung oder Dejustage selbständig erfolgt.

2. Verfahren nach Anspruch 1, **dadurch gekennzeichnet**, daß die Beschleunigungs-, Verzögerungs- und/oder Belastungswerte des Motors überwacht werden, daß bei Abweichungen von den ursprünglich maximalen Werten die Betriebswerte der Steuerkenngröße oder Steuerkennlinie im normalen Betrieb verändert werden und die daraus resultierenden Änderungen der Beschleunigungs-, Verzögerungs- und/oder Belastungswerte des Motors erfaßt und gespeichert werden und daß durch Vergleich der gespeicherten Werte eine korrigierte Steuerkenngröße oder Steuerkennlinie extra- oder interpoliert wird.

3. Vorrichtung zur Steuerung eines elektronisch kommutierten Motors, bestehend aus einem Geber (1, 2, 3), der zur Kommutierung heranzuziehende Signale abgreift, einer Kommutierungsschaltung (4), steuerbaren Endstufen (12, 13, 14), die von der Kommutierungsschaltung (4) geschaltet sind und in Motorwicklungen (5) einen variablen Strom speisen, einem mit dem Geber (1, 2, 3) und der Kommutierungsschaltung (4) elektrisch verbundenen variablen Verzögerungsglied (7) mit einem Steuereingang (8), über den mittels einer Stellgröße die Verzögerungszeit der Kommutierung steuerbar ist, und elektronischen Schaltungsmitteln zur Gewinnung der Stellgröße für die Steuerung der Verzögerungszeit, **dadurch gekennzeichnet**, daß das variable Verzögerungsglied (7) zwischen dem Geber (1, 2, 3) und der Kommutierungsschaltung (4) angeordnet ist, daß eine Steuerschaltung (9) vorgesehen ist, welche aus einer die Beschleunigung, Verzögerung und/oder Belastung des Motors vorgebenden Steuergröße die Stellgröße einem Steuereingang (8) des Verzögerungsgliedes (7) zuführt, wobei die Steuergröße aus einer aus dem Sollstrom und dem Iststrom durch die Wicklung abgeleiteten Größe zusammengesetzt ist, daß die Steuerschaltung (9) die Stellgröße aus der Steuergröße in Abhängigkeit einer gespeicherten Steuerkenngröße oder Steuerkennlinie gewinnt und daß eine Meßschaltung (10) vorgesehen ist, welche in vorgegebenen Zeitabständen oder bei Veränderung der Werte durch Alterung oder Dejustage selbständig Beschleunigungs-, Verzögerungs- und/oder Belastungswerte des Motors bei unterschiedlichen Steuerkenngrößen ermittelt und den Wert oder die Werte der Steuerkenngröße für maximale Beschleunigungs-, Verzögerungs- und/oder Belastungswerte als Betriebswerte der Steuerkenngröße oder Steuerkennlinie in die Steuerschaltung (9) überträgt.

4. Vorrichtung nach Anspruch 3, **dadurch gekennzeichnet**, daß eine Korrekturschaltung (11) vorgesehen ist, welche die von der Meßschaltung (10) ermittelten Beschleunigungs-, Verzögerungs- und/oder Belastungswerte speichert, bei Abweichungen von den ursprünglich maximalen Werten vorläufige Korrektursignale zur Steuerschaltung (9) überträgt, die von der Meßschaltung (10) ermittelten veränderten Beschleunigungs-, Verzögerungs- und/oder Belastungswerte ebenfalls speichert und durch Vergleich der gespeicherten Werte eine korrigierte Steuerkenngröße oder Steuerkennlinie extra- oder interpoliert und Betriebs-Korrektursignale zur Steuerschaltung (9) überträgt.

## Claims

1. A process for controlling an electronically commutated motor by controlling the winding current, wherein in an acceleration-, deceleration- or load phase the winding current is firstly changed beyond a stationary value assigned to a target speed or a load situation and when the target speed or the stationary load state is reached is set at the stationary value and wherein in the acceleration-, deceleration- and/or load phase additionally the commutation time of the winding current is changed in dependence upon a control characteristic quantity or control characteristic curve which predetermines the acceleration, deceleration and/or load, characterised in that the control characteristic quantity is defined on the basis of motor characteristics in that acceleration-, deceleration- and/or load values of the motor are determined in the case of different control characteristic quantities and the value(s) of the control characteristic quantity for maximum acceleration-, deceleration- and/or load values is/are transferred as operating values of the control characteristic quantity or control characteristic curve, where the determination of the value or values of the control characteristic quantity takes place automatically following each switching on of the device which contains the motor and/or at predetermined intervals of time and/or in the event of a change in the values due to ageing or maladjustment.

2. A process as claimed in Claim 1, characterised in that the acceleration-, deceleration- and/or load values of the motor are monitored, that in the event of deviations from the original, maximum values the operating values of the control characteristic quantity or control characteristic curve in normal operation are changed and the resultant changes in the acceleration-, deceleration- and/or load values of the motor are detected and stored, and that by comparing the stored values a corrected control characteristic quantity or control characteristic curve is extra- or interpolated.

3. A device for controlling an electronically commutated motor, comprising a sensor (1, 2, 3) which taps signals to be used for the commutation, a commutation circuit (4), controllable end stages (12, 13, 14) which are switched by the commutation circuit (4) and supply a variable current to motor windings (5), a variable delay element (7), which is electrically connected to the sensor (1, 2, 3) and the commutation circuit (4), with a control input (8) via which the delay time of the commutation can be controlled by means of a correcting variable, and with electronic circuit means for acquiring the correcting variable for the control of the delay time, characterised in that the variable delay element (7) is arranged between the sensor (1, 2, 3) and the commutation circuit (4), that a control circuit (9) is provided which, from a control variable which predetermines the acceleration, deceleration and/or load of the motor, supplies the correcting variable to a control input (8) of the delay element (7), where the control variable consists of a quantity derived from the theoretical current and the actual current through the winding, that the control circuit (9) acquires the correcting variable from the control variable in dependence upon a stored control characteristic quantity or control characteristic curve, and that a measuring circuit (10) is provided which at predetermined intervals of time or in the event of a change in the values due to ageing or maladjustment automatically determines acceleration-, deceleration- and/or load values of the motor in the case of different control characteristic quantities and transfers the value or values of the control characteristic quantity for maximum acceleration-, deceleration and/or load values as operating values of the control characteristic quantity or control characteristic curve to the control circuit (9).

4. A device as claimed in Claim 3, characterised in that a correcting circuit (11) is provided which stores the acceleration-, deceleration- and/or load values determined by the measuring circuit (10), in the event of deviations from the original, maximum values transfers temporary correction signals to the control circuit (9), likewise stores the changed acceleration-, deceleration- and/or load values determined by the measuring circuit (10), and by comparing the stored values extra- or interpolates a corrected control characteristic quantity or control characteristic curve and transfers operation correcting signals to the control circuit (9).

## Revendications

1. Procédé pour la commande d'un moteur commuté électroniquement par la commande du courant de bobinage, le courant de bobinage étant tout d'abord varié dans une phase d'accélération, de temporisation ou de sollicitation, au-delà d'une valeur stationnaire, d'une valeur affectée à un nombre de tours visé ou à un cas de sollicitation et étant réglé sur la valeur stationnaire lorsque le nombre de tours visé ou l'état de sollicitation stationnaire est atteint, le moment de commutation du courant de bobinage étant en plus modifié dans la phase d'accélération, de temporisation et/ou de sollicitation en fonction d'une grandeur caractéristique de commande ou d'une courbe caractéristique de commande qui prédéfinit l'accélération, la temporisation et/ou la sollicitation, **caractérisé en ce** que la grandeur caractéristique de commande est fixée en raison de grandeurs caractéristiques de moteurs, cependant que des valeurs d'accélération, de temporisation et/ou de sollicitation du moteur sont détectées pour différentes grandeurs caractéristiques de commande et que la ou les valeurs de la grandeur caractéristique de commande pour les valeurs d'accélération, de temporisation et/ou de sollicitation maximales sont prises en charge comme valeurs de service de la grandeur caractéristique de commande ou de la courbe caractéristique de commande, la détection de la ou des valeurs de la grandeur de commande se faisant automatiquement après chaque mise en marche de l'appareil qui contient le moteur et/ou à des intervalles de temps prédéfinis et/ou lors de la variation des valeurs par vieillissement ou désajustement.

2. Procédé selon la revendication 1, **caractérisé en ce** que les valeurs d'accélération, de temporisation et/ou de sollicitation du moteur sont contrôlées, que, lorsqu'il y a des écarts des valeurs maximales d'origine, les valeurs de service de la grandeur caractéristique de commande ou de la courbe caractéristique de commande sont modifiées en service normal et que les modifications des valeurs d'accélération, de temporisation et/ou de sollicitation du moteur qui en résultent sont détectées et mises en mémoire et qu'une grandeur caractéristique de commande ou une courbe caractéristique de commande corrigée est extrapolée ou interpolée par comparaison des valeurs mises en mémoire.

3. Dispositif pour la commande d'un moteur commuté électroniquement composé d'un transmetteur (1, 2, 3), qui prend des signaux qui doivent servir à la commutation, d'un circuit de commutation (4), d'étages de sortie qui peuvent être commandés (12, 13, 14), qui sont commutés par le circuit de commutation (4) et qui alimentent un courant variable dans des bobinages de moteur (5), d'un élément de temporisation variable (7), relié électriquement au transmetteur (1, 2, 3) et au circuit de commutation (4), avec une entrée de commande (8) par l'intermédiaire de laquelle le temps de temporisation de la commutation peut être commandé au moyen d'une variable réglante, et de moyens de circuit électroniques pour obtenir la variable réglante pour la commande du temps de temporisation, **caractérisé en ce** que l'élément de temporisation variable (7) est placé entre le transmetteur (1, 2, 3) et le circuit de commutation (4), qu'il est prévu un circuit de commande (9) qui, à partir d'une grandeur de commande qui prédéfinit l'accélération, la temporisation et/ou la sollicitation du moteur, amène la variable réglante à une entrée de commande (8) de l'élément de temporisation (7), la grandeur de commande étant composée d'une grandeur qui est dérivée du courant de consigne et du courant effectif à travers le bobinage, que le circuit de commande (9) obtient la variable réglante à partir de la grandeur de commande en fonction d'une grandeur caractéristique de commande ou d'une courbe caractéristique de commande mise en mémoire et qu'un circuit de mesure (10) est prévu qui détecte automatiquement, à des intervalles de temps prédéfinis ou, lors de la variation des valeurs par vieillissement ou désajustement, des valeurs d'accélération, de temporisation et/ou de sollicitation du moteur pour différentes grandeurs caractéristiques de commande et transmet la valeur ou les valeurs de la grandeur caractéristique de commande pour des valeurs d'accélération, de temporisation et/ou de solliciation maximales comme valeurs de service de la grandeur caractéristique de commande ou de la courbe caractéristique de commande au circuit de commande (9).

4. Dispositif selon la revendication 3, **caractérisé en ce** qu'il est prévu un circuit de correction (11) qui met en mémoire les valeurs d'accélération, de temporisation et/ou de sollicitation qui ont été détectées par le circuit de mesure (10), qui, lors d'écarts par rapport aux valeurs maximales d'origine, transmet des signaux de correction provisoires au circuit de commande (9), qui met également en mémoire les valeurs d'accélération, de temporisation et/ou de sollicitation modifiées détectées par le circuit de mesure (10) et qui, par comparaison des valeurs mémorisées, extrapole ou intrapole une grandeur caractéristique de commande ou une courbe caractéristique de commande corrigée et transmet des signaux de correction de service au circuit de commande (9).
